# EUROPÄISCHE PATENTSCHRIFT

(11) **EP 3 388 645 B1**
(45) Veröffentlichungstag und Bekanntmachung des Hinweises auf die Patenterteilung: **02.10.2019**
(21) Anmeldenummer: 18020145.1
(22) Anmeldetag: 12.04.2018
(51) Int. Cl.: F01N 3/021, F01N 13/16, F01N 13/00, F01N 3/10, F01N 3/28, B01D 46/42

(54) **VERFAHREN ZUR HERSTELLUNG EINER EINEN PARTIKELFILTER AUFWEISENDEN ABGASANLAGE EINES OTTOMOTORS SOWIE ABGASANLAGE EINES OTTOMOTORS**
METHOD FOR MANUFACTURING AN EXHAUST SYSTEM FOR A GASOLINE INTERNAL COMBUSTION ENGINE COMPRISING A PARTICULATE FILTER, AS WELL AS AN EXHAUST SYSTEM FOR A GASOLINE INTERNAL COMBUSTION ENGINE
PROCÉDÉ POUR LA FABRICATION D'UN SYSTÈME D'ÉCHAPPEMENT D'UN MOTEUR À ESSENCE, AINSI QU'UN SYSTÈME D'ÉCHAPPEMENT D'UN MOTEUR À ESSENCE

(30) Priorität: 12.04.2017 DE 102017107893
(43) Veröffentlichungstag der Anmeldung: 17.10.2018
(73) Patentinhaber: Dr. Ing. h.c. F. Porsche AG, 70435 Stuttgart (DE)
(72) Erfinder: Wessels, Michael, 74321 Bietigheim-Bissingen (DE)

(56) Entgegenhaltungen:
- EP-A1- 2 913 495
- DE-A1-102007 006 788
- DE-A1-102016 110 166
- US-A1- 2010 266 461
- US-A1- 2016 123 201

## Beschreibung

Die Erfindung betrifft ein Verfahren zur Herstellung einer einen Partikelfilter aufweisenden Abgasanlage eines Ottomotors. Sie betrifft ferner eine Abgasanlage eines Ottomotors im Zustand vor dem ersten Aufheizen der Abgasanlage.

Die laufende gesetzliche Forderung zur Verbrauchsreduktion und gleichzeitige Verschärfung der Partikelgrenzwerte (Masse und Anzahl) stellt zunehmend eine Herausforderung für die Entwicklung von Verbrennungsmotoren dar. Die Einhaltung zukünftiger Partikelgrenzwerte unter den geforderten Randbedingungen wird zukünftig einer Verbrauchsabsenkung im Wege stehen. Dies führt dazu, dass in Zukunft fast alle Verbrennungsmotoren mit einem Partikelfilter ausgestattet werden müssen, wie dies beim Dieselmotor heute schon der Fall ist.

Im Partikelfilter wird der Ruß aus der Verbrennung abgeschieden und durch eine gezielte Regeneration des Filters wieder in gasförmige Bestandteile umgewandelt. Des Weiteren verbleiben im Filter dauerhaft Aschebestandteile, die ihren Ursprung in Motoröl- und/oder Kraftstoffadditiven haben. Heute wird die Rußbeladung des Filters mittels Gegendruckmessung und redundant über ein Berechnungsmodul erfasst. Abhängig vom Rußfüllstand werden aktive Maßnahmen zur Rußregeneration eingeleitet. Die Gegendruckmessung (Δp = f (Rußbeladung)) weist jedoch eine starke Hysterese auf, weshalb eine klare Zuordnung der Beladung des Partikelfilters mit Ruß zum Gegendruck nicht gegeben ist. Die berechnungsmodellbasierte Regeneration ist wegen des starken Kraftstoffeinflusses meist deutlich zu früh, insbesondere weil zwischen den Kraftstoffen die Partikelanzahl/-masse um den Faktor 5 variieren kann. Ziel muss es sein, die Hysterese des Gegendrucks zu verkleinern, um eine klare Regelgröße für die Regeneration des Partikelfilters zu erhalten. Gleichzeitig kann in einem Fall ohne Hystereseverhalten auch ein stabilerer Bauteilschutz gewährleistet werden, da spezifisch hochbeladene Randzonen mittels Gegendruckmessung besser erfasst werden können.

Heutige Partikelfilter weisen zwei Filterfunktionen auf, einerseits die Tiefenfiltration und andererseits die Oberflächenfiltration. So führt die Rußeinlagerung im ersten Schritt zu Tiefenfiltration mit hohem Druckanstieg und im zweiten Schritt zu Oberflächenfiltrationen mit geringerem Druckanstieg.

Bei der Tiefenfiltration erfolgt das Abscheiden der Partikel in der Wand des Partikelfilters. Bei der Oberflächenfiltration erfolgt die Filtration auf der Oberfläche des Filters. Über die Laufzeit wird der Partikelfilter immer mehr vom Tiefenfilter zum Oberflächenfilter. Die Tiefenfiltration ist verbunden mit einem hohen Druckanstieg, da in diesem Fall die Permeabilität des Abgases besonders negativ beeinflusst wird. Sind die Poren in der Wand weitgehend mit Ruß belegt, lagert sich im Folgenden der Ruß vornehmlich auf der Wand ab. Diese Oberflächenfiltration führt zu einem moderaten Druckanstieg, geringer als bei der Tiefenfiltration. Wird der Ruß im Filter nun regeneriert, so baut sich der Druck mit einem Hystereseverhalten ab, das heißt im ersten Schritt mit einem großen Druckabfall, anschließend mit einem moderaten Druckabfall.

Im Gegensatz zu Ruß lagert sich die Asche im Partikelfilter stets auf der Wand und nicht in der Wand ab. Hierdurch wird die Tiefenfiltration des Rußes grundsätzlich und irreversibel unterbunden, da der Ruß die Ascheschicht nicht durchdringen kann. Für den Druckanstieg mit steigender Rußeinlagerung bedeutet dies, dass sich über den gesamten Bereich ein linearer Zusammenhang, ohne Hysterese, einstellt. Die Güte der Bestimmung der Rußbeladung durch eine Gegendruckmessung wird dadurch signifikant verbessert, wodurch Rußregenerationsstrategien zielgerichteter und verbrauchsoptimaler gesteuert werden können.

Um dieses oben beschriebene Problem zu lösen, müsste gezielt eine Ascheschicht als Filterkuchen auf die Oberfläche der Kanalwände des Partikelfilters im Neuzustand aufgebracht werden, somit vor dem ersten Aufheizen der Abgasanlage aufgebracht werden.

Aus der WO 2014/183998 A1 ist ein Verfahren zur Ermittlung von Rußbeladungen eines Partikelfilters bei Ottomotoren bekannt. Die Ermittlung der eingetragenen Rußbeladung umfasst eine Berücksichtigung von vorbestimmten Rußanteilen von rußrelevanten Ereignissen eines standardisierten Fahrzyklus.

DE 10 2007 006 788 A offenbart eine Anlage nach dem Oberbegriff des Anspruchs 9.

Ein Verfahren für ein Fahrzeug gemäß DE 10 2016 110 166 A umfasst als Reaktion auf die Installation eines neuen Abgasteilchenfilters das Dotieren des Kraftstoffs mit einem ascheerzeugenden Additiv und das Verbrennen des dotierten Kraftstoffs, um Asche zu erzeugen, wobei die Asche sich als Aschebeschichtung auf dem neuen Abgasteilchenfilter ablagert. Auf diese Weise kann eine Filtrationseffizienz eines Abgasteilchenfilters schnell im Vergleich zu einem Filter ohne abgelagerte Ascheschicht erhöht werden, kostengünstig im Vergleich zu herkömmlichen Verfahren, die Membranen verwenden, und mit einem geringeren Abfall des Gegendrucks im Vergleich zu herkömmlichen Verfahren.

Es ist bekannt, bei der Herstellung von Abgasanlagen Kunststoffringe als Abstandhalter in der Abgasanlage zu verbauen. Diese Ringe dienen dazu, während des Fertigungsprozesses sicherzustellen, dass die Bauteile zueinander richtig positioniert sind und den benötigten Abstand zueinander einhalten. Nach dem Verschweißen der Teile miteinander sind die Abstandsringe nicht mehr erforderlich. Beim ersten Aufheizen der Abgasanlage durch den Motor, werden diese Kunststoffringe verbrannt und die Bauteile im Inneren der Abgasanlage haben den nötigen Freigang, den sie im Betrieb benötigen.

Aufgabe der vorliegenden Erfindung ist es, ein Verfahren zur Herstellung einer einen Partikelfilter aufweisenden Abgasanlage eines Ottomotors anzugeben, das es ermöglicht, auf einfachste Art und Weise die Ascheschicht auf den Partikelfilter, insbesondere die Ascheschicht als Filterkuchen auf die Oberfläche der Kanalwände des Partikelfilters, aufzubringen. Aufgabe der Erfindung ist es ferner, eine Abgasanlage eines Ottomotors anzugeben, die bei baulich einfachster Gestaltung ein solches gezieltes Aufbringen einer Ascheschicht ermöglicht.

Gelöst wird die Aufgabe durch ein Verfahren, das die Merkmale des Patentanspruchs 1 aufweist.

Bei diesem Verfahren zur Herstellung einer einen Partikelfilter aufweisenden Abgasanlage eines Ottomotors erfolgt zunächst ein Positionieren von mindestens zwei zum Durchleiten von Abgas vorgesehenen Bauteilen, wobei mindestens eines der Bauteile bei der Abgasanlage zwischen einem Auslassventil des Ottomotors und dem Partikelfilter vorgesehen sind. Zwischen den Bauteilen wird ein Abstandselement angeordnet, das diese Bauteile positioniert. Das Abstandselement beinhaltet aschebildende Komponenten. Nach diesem Positionieren der mindestens zwei Bauteile mit dem zwischen diesen angeordneten Abstandselement werden die Bauteile dauerhaft miteinander verbunden. Es erfolgt dann das Verbrennen des Abstandselements beim ersten Aufheizen der Abgasanlage mit Freisetzen der aschebildenden Komponenten und deren Abscheiden auf dem Partikelfilter.

Dem Abstandselement kommt somit nicht nur die Funktion zu, während des Fertigungsprozesses sicherzustellen, dass die Bauteile zueinander richtig positioniert sind und den benötigten Abstand zueinander einhalten. Da das Abstandselement aschebildende Komponenten beinhaltet, verbrennt das Abstandselement beim ersten Aufheizen der Abgasanlage mit Freisetzen der aschebildenden Komponenten und deren Abscheiden auf dem Partikelfilter. Hierbei kommt für das Abstandselement jegliches Material infrage, das bei den bei einer Abgasanlage vorliegenden Randbedingungen verbrennen kann. Einzige Bedingung ist, dass es aschebildende Komponenten beinhalten muss und diese beim Aufheizen der Abgasanlage freigesetzt werden und vom Abgasstrom auf den Partikelfilter des Ottomotors getragen werden. Die Position muss hierbei nur vor dem Partikelfilter gewählt werden. Grundsätzlich kann das jeweilige Abstandselement zwischen dem Auslassventil und dem Partikelfilter angeordnet werden.

Der besondere Vorteil des erfindungsgemäßen Verfahrens mit der beschriebenen Aufbringung der Aschekomponenten besteht darin, dass kein zusätzlicher Prozessschritt erforderlich ist. Es finden die bislang bei der Montage eingesetzten Abstandselemente Verwendung, mit dem Unterschied, dass diese nunmehr aschebildende Komponenten beinhalten, die beim Verbrennen des Abgaselements beim ersten Aufheizen der Abgasanlage die aschebildenden Komponenten freisetzen und diese sich auf dem Partikelfilter abscheiden. Ist das Abstandselement direkt vor dem Partikelfilter platziert, können die aschebildenden Komponenten bei deren Freisetzung nur auf den Partikelfilter wirken und es sind andere Motorbauteile hiervon nicht betroffen. Von Vorteil ist ferner, dass der Partikelfilter, nach dem ersten Durchheizen der Abgasanlage, seine volle Filtrationsrate erreicht. Der Zusatzeffekt, der aus Abstandselementen mit aschebildenden Komponenten resultiert, kann ohne zusätzliche relevante Kosten gegenüber den bisherigen Abstandselementen aus Kunststoff realisiert werden.

Es ist insbesondere vorgesehen, dass eines der Bauteile der Partikelfilter ist und ein anderes der Bauteile unmittelbar abgasstromaufwärts des Partikelfilters angeordnet wird. Hierdurch wird der genannte Vorteil erreicht, dass die aschebildenden Komponenten nur auf den Partikelfilter wirken.

Alternativ kann vorgesehen sein, dass die Bauteile abgasstromaufwärts des Partikelfilters angeordnet werden. Das Abstandselement ist in diesem Fall somit nicht zwischen dem Partikelfilter und dem unmittelbar abgasstromaufwärts des Partikelfilters angeordneten Bauteil platziert, sondern zwischen abgasstromaufwärts des Partikelfilters angeordneten Bauteilen.

Es wird als besonders vorteilhaft angesehen, wenn das mindestens eine Abstandselement direkt vor dem Partikelfilter angeordnet wird.

Die Bauteile werden vorzugsweise mittels Schweißen dauerhaft miteinander verbunden. Nach dem dauerhaften Verbinden der Bauteile besitzt das Abstandselement bzw. besitzen die Abstandselemente nur noch deren Funktion als Element, das die aschebildenden Komponenten beinhaltet, wobei die aschebildenden Komponenten beim Verbrennen des Abstandselements beim ersten Aufheizen der Abgasanlage freigesetzt werden und sich auf dem Partikelfilter abscheiden.

Es ist insbesondere ein aus Kunststoff bestehendes, mit den aschebildenden Komponenten versehenes Abstandselement oder ein aus Papier bestehendes, mit den aschebildenden Komponenten versehenes Abstandselement zwischen den Bauteilen angeordnet. Diese Materialien eignen sich besonders gut zur Aufnahme der aschebildenden Komponenten.

Die aschebildenden Komponenten bzw. die auf den Partikelfilter aufgebrachte Ascheschicht besteht insbesondere aus Elementen, die im späteren Betrieb nicht durch eine Oxidation oder eine generelle Ablösung wieder entfernt werden können. Des Weiteren ist sicherzustellen, dass die Ascheschicht nur auf die Wand und nicht in die Wand eingebracht wird. Solche Elemente sind zum Beispiel Ca, Mg, P und Zn.

Vorzugsweise ist ein als Ring ausgebildetes Abstandselement zwischen den Bauteilen angeordnet. Es können mehrere Ringe zwischen mehreren hintereinander angeordneten Bauteilen angeordnet sein.

Das erfindungsgemäße Verfahren nebst dessen Weiterbildungen beinhaltet diverse Vorteile:
- So ist es möglich, die Asche genau auf der Oberfläche des Partikelfilters aufzubringen.
- Die Ascheschicht kann bei entsprechender Ausstattung des jeweiligen Abstandselements mit aschebildenden Komponenten bezüglich Dicke und Zusammensetzung genau eingestellt werden.
- Die Tiefenfiltration wird gezielt unterbunden und damit kann eine klare Zuordnung zwischen Gegendruck und angelagertem Ruß hergestellt werden.
- Der Gegendruck der Teile bleibt über deren Laufzeit relativ konstant und der Druckanstieg verhält sich linear.
- Die Filtrationsrate heutiger Partikelfilter nimmt erst nach einer gewissen Laufzeit den gewünschten Wert an. Mit diesem Verfahren kann die Filtrationsrate sehr genau eingestellt werden und erreicht schon direkt im Anschluss nach dem ersten Aufheizen der Abgasanlage den geforderten Wert.
- Der Partikelfilter kann extrem porös ausgeführt werden und damit einen extrem niedrigen Gegendruck aufweisen, weil mit dem vorgeschlagenen Verfahren die Filtrationsrate genau eingestellt werden kann.

Gelöst wird die Aufgabe ferner durch eine Abgasanlage, die gemäß den Merkmalen des Patentanspruchs 9 ausgebildet ist.

Diese Abgasanlage eines Ottomotors weist, im Zustand vor dem ersten Aufheizen der Abgasanlage, mindestens zwei zum Durchleiten von Abgas vorgesehene, dauerhaft miteinander verbundene Bauteile der Abgasanlage auf. Die Bauteile sind zwischen einem Auslassventil des Ottomotors und einem Partikelfilter angeordnet oder es ist eines der Bauteile der Partikelfilter und das andere Bauteil abgasstromaufwärtig des Partikelfilters angeordnet. Zwischen den Bauteilen ist mindestens ein diese positionierendes, verbrennbares Abstandselement angeordnet, das aschebildende Komponenten beinhaltet.

Das mindestens eine Abstandselement ist vorzugsweise als Ring ausgebildet, der zwischen den beiden Bauteilen angeordnet ist.

Das mindestens eine Abstandselement besteht vorzugsweise aus Kunststoff mit aschebildenden Komponenten oder es besteht aus Papier mit aschebildenden Komponenten.

Das Abstandselement ist insbesondere zwischen dem Partikelfilter und einem Katalysator der Abgasanlage angeordnet.

## Patentansprüche

1. Verfahren zur Herstellung einer einen Partikelfilter aufweisenden Abgasanlage eines Ottomotors, mit folgenden Merkmalen:
- Positionieren von mindestens zwei zum Durchleiten von Abgas vorgesehenen Bauteilen, wobei mindestens eines der Bauteile bei der Abgasanlage zwischen einem Auslassventil des Ottomotors und dem Partikelfilter vorgesehen ist, mit mindestens einem zwischen den Bauteilen angeordneten, diese positionierenden Abstandselement, wobei das Abstandselement aschebildende Komponenten beinhaltet,
- dauerhaftes Verbinden der Bauteile,
- Verbrennen des Abstandselements beim ersten Aufheizen der Abgasanlage mit Freisetzen der aschebildenden Komponenten und deren Abscheiden auf dem Partikelfilter.

2. Verfahren nach Anspruch 1, wobei eines der Bauteile der Partikelfilter ist und ein anderes der Bauteile unmittelbar abgasstromaufwärts des Partikelfilters angeordnet wird.

3. Verfahren nach Anspruch 1, wobei die Bauteile abgasstromaufwärts des Partikelfilters angeordnet werden.

4. Verfahren nach einem der Ansprüche 1 bis 3, wobei das mindestens eine Abstandselement direkt vor dem Partikelfilter angeordnet wird.

5. Verfahren nach einem der Ansprüche 1 bis 4, wobei die Bauteile mittels Schweißen dauerhaft miteinander verbunden werden.

6. Verfahren nach einem der Ansprüche 1 bis 5, wobei ein aus Kunststoff oder Papier bestehendes, mit den aschebildenden Komponenten versehenes Abstandselement zwischen den Bauteilen angeordnet wird.

7. Verfahren nach einem der Ansprüche 1 bis 6, wobei ein als Ring ausgebildetes Abstandselement zwischen den Bauteilen angeordnet wird.

8. Verfahren nach Anspruch 7, wobei mehrere Ringe zwischen mehreren hintereinander angeordneten Bauteilen angeordnet werden.

9. Abgasanlage eines Ottomotors im Zustand vor dem ersten Aufheizen der Abgasanlage, mit mindestens zwei zum Durchleiten von Abgas vorgesehenen, dauerhaft miteinander verbundenen Bauteilen der Abgasanlage, wobei die Bauteile zwischen einem Auslassventil des Ottomotors und einem Partikelfilter angeordnet sind oder eines der Bauteile der Partikelfilter ist und das andere Bauteil abgasstromaufwärts des Partikelfilters angeordnet ist, wobei zwischen den Bauteilen mindestens ein diese positionierendes, rückstandsfrei verbrennbares Abstandselement angeordnet ist,
**dadurch gekennzeichnet, dass**
das Abstandselement aschebildende Komponenten beinhaltet.

10. Abgasanlage nach Anspruch 9, wobei das mindestens eine Abstandselement aus Kunststoff mit aschebildenden Komponenten oder aus Papier mit aschebildenden Komponenten besteht.

11. Verfahren nach Anspruch 9 oder 10, wobei das mindestens eine Abstandselement als Ring ausgebildet ist, der zwischen den beiden Bauteilen angeordnet ist.

12. Abgasanlage nach einem der Ansprüche 9 bis 11, wobei das Abstandselement zwischen dem Partikelfilter und einem Katalysator angeordnet ist.

## Claims

1. Method for producing an exhaust gas system of a petrol engine, which exhaust gas system has a particulate filter, having the following features:
positioning of at least two components which are provided for the passing through of exhaust gas, at least one of the components in the exhaust gas system being provided between an outlet valve of the petrol engine and the particulate filter, having at least one spacer element which is arranged between the components and positions them, the spacer element comprising ash-forming components,
- permanent connecting of the components;
- burning of the spacer element during first heating of the exhaust gas system with releasing of the ash-forming components and depositing of them on the particulate filter.

2. Method according to Claim 1, one of the components being the particulate filter, and another one of the components being arranged directly upstream of the particulate filter in the exhaust gas stream.

3. Method according to Claim 1, the, components being arranged upstream of the particulate filter in the exhaust gas stream.

4. Method according to one of Claims 1 to 3, the at least one spacer element being arranged directly in front of the particulate filter.

5. Method according to one of Claims 1 to 4, the components being connected permanently to one another by means of welding.

6. Method according to one of Claims 1 to 5, a spacer element which consists of plastic or paper and is provided with the ash-forming components being arranged between the components.

7. Method according to one of Claims 1 to 6, a spacer element which is configured as a ring being arranged between the components.

8. Method according to Claim 7, a plurality of rings being arranged between a plurality of components which are arranged behind one another.

9. Exhaust gas system of a petrol engine in the state before first heating of the exhaust gas system, having at least two components of the exhaust gas system which are connected permanently to one another and are provided for the passing through of exhaust gas, the components being arranged between an outlet valve of the petrol engine and a particulate filter, or one of the components being the particulate filter and the other component being arranged upstream of the particulate filter in the exhaust gas stream, a spacer element which can be burned without residues and positions the components being arranged between the said components, **characterized in** ' that the spacer element comprises ash-forming components.

10. Exhaust gas system according to Claim 9, the at least one spacer element consisting of plastic with ash-forming components or of paper with ash-forming components.

11. Method according to Claim 9 or 10, the at least one spacer element being configured as a ring which is arranged between the two components.

12. Exhaust gas system according to one of Claims 9 to 11, the spacer element being arranged between the particulate filter and a catalytic converter.

## Revendications

1. Procédé pour la fabrication d'un système d'échappement d'un moteur à essence présentant un filtre . à particules, qui présente les caractéristiques suivantes :
- positionner au moins deux organes prévus pour conduire les gaz d'échappement, dans lequel au moins un des organes est prévu dans le système d'échappement entre une soupape d'échappement du moteur à essence et le filtre à , particules, avec au moins un élément d'écartement disposé entre les organes et positionnant ces derniers, dans lequel l'élément d'écartement comporte des composants formant des cendres,
- assembler durablement les organes,
- brûler l'élément d'écartement lors- du premier chauffage du système d'échappement avec libération de composants formant des cendres et leur séparation sur le filtre à particules.

2. Procédé selon la revendication 1, dans lequel un des organes est le filtre à particules et un autre des organes est disposé immédiatement en amont du filtre à particules dans le courant de gaz d'échappement.

3. Procédé selon la revendication 1, dans lequel les organes sont disposés en' amont du filtre à particules dans le courant de gaz d'échappement.

4. Procédé selon l'une quelconque des revendications 1 à 3, dans lequel ledit au moins un élément d'écartement est disposé directement avant le filtre à particules.

5. Procédé selon l'une quelconque des revendications 1 à 4, dans lequel les organes sont durablement assemblés l'un à l'autre par soudage.

6. Procédé selon l'une quelconque des revendications 1 à 5, dans lequel un élément d'écartement composé de matière plastique ou de papier, garni de composants formant des cendres, est disposé entre les organes.

7. Procédé selon l'une quelconque des revendications 1 à 6, dans lequel un élément d'écartement réalisé en forme d'anneau est disposé entre les organes.

8. Procédé selon la revendication 7, dans lequel plusieurs anneaux sont disposés entre plusieurs organes disposés l'un derrière l'autre.

9. Système d'échappement d'un moteur à essence dans l'état existant avant le premier chauffage du système d'échappement, avec au moins deux organes du système d'échappement prévus pour conduire des gaz d'échappement et assemblés durablement l'un à l'autre, dans lequel les organes sont disposés entre une soupape d'échappement du moteur à essence et un filtre à particules ou un des organes est le filtre à particules et l'autre organe est disposé en amont du filtre à particules dans le courant de gaz d'échappement, dans lequel au moins un élément d'écartement positionnant ces derniers et pouvant brûler sans résidus est disposé entre les organes, **caractérisé en ce que** l'élément d'écartement contient des composants formant des cendres.,

10. Système d'échappement selon la revendication 9, dans lequel ledit au moins un élément d'écartement se compose de matière plastique avec des composants formant des cendres ou de papier avec des composants formant des cendres.

11. Procédé selon une revendication 9 ou 10, dans lequel ledit au moins un élément d'écartement est formé par un anneau, qui est disposé entre les deux organes.

12. Système d'échappement selon l'une quelconque des revendications 9 à 11, dans lequel l'élément d'écartement est disposé entre le filtre à particules et un catalyseur.
